Europäisches Patentamt

European Patent Office

Office européen des brevets

(11) Publication number: **0 262 938 B1**

# EUROPEAN PATENT SPECIFICATION

(45) Date of publication of patent specification: **15.12.93**  (51) Int. Cl.⁵: **G06F 15/38**, G06F 3/16

(21) Application number: **87308638.3**

(22) Date of filing: **29.09.87**

(54) **Language translation system.**

(30) Priority: **03.10.86 GB 8623839**
**01.05.87 GB 8710376**

(43) Date of publication of application:
**06.04.88 Bulletin 88/14**

(45) Publication of the grant of the patent:
**15.12.93 Bulletin 93/50**

(84) Designated Contracting States:
**AT BE CH DE ES FR GB GR IT LI LU NL SE**

(56) References cited:
**BE-A- 873 458**
**US-A- 4 507 750**

(73) Proprietor: **BRITISH TELECOMMUNICATIONS public limited company**
**British Telecom Centre,**
**81 Newgate Street**
**London EC1A 7AJ(GB)**

(72) Inventor: **Stentiford, Frederick Warwick Michael**
**Sheepstor Boyton**
**Woodbridge Suffolk IP12 3LH(GB)**
Inventor: **Steer, Martin George**
**Clover Cottage**
**Offton Ipswich Suffolk IP8 4SE(GB)**

(74) Representative: **Roberts, Simon Christopher et al**
**BRITISH TELECOM**
**Intellectual Property Unit**
**13th Floor**
**151, Gower Street**
**London, WC1E 6BA (GB)**

Rank Xerox (UK) Business Services
(3.10/3.6/3.3.1)

## Description

This invention relates to a system for translating phrases from a first language to a second language, and in particular but not exclusively to such a system for producing speech in a second language from speech in a first language.

A machine which can rapidly and automatically translate languages, particularly speech, has been sought for many years. However, even with the tremendous progress in computing, speech recognition and speech synthesis in recent years, such machines remain the stuff of dreams and fiction.

Considerable research has been carried out on computer systems for the automatic translation of text. Apart from a few very restricted applications (eg translation of weather forecasts), no product exists which can automatically produce accurate translations and hence replace human translators. The problems of translating speech are compounded by the errors of speech recognition, the additional information in intonation, stress etc and the inexactness of speech itself.

Unfortunately, existing text language translation packages are all deficient in some way or another and do not meet the requirements of a system translating speech-to-speech. Most such packages have been designed as an aid for professional translators, and produce outputs which have to be post-edited before being presentable in their target language. Most packages are either menu-driven and interactive or operate in a slow batch processing mode, neither of which is suitable for "real-time" speech operation. Translation packages also tend to be unreliable, as idioms and other exceptions can easily cause erroneous output: the user has no guarantee that the output is correctly translated. Existing systems are also very CPU intensive, making them expensive to run and hence unsuitable for many cost sensitive applications.

In US 4507750 there is described a speech recognition apparatus in which contextual consideration is given to spoken words to facilitate improved recognition. The apparatus is used inter alia in language translation apparatus. Full contextual analysis, based on a large repertoire of stored grammatical rules, means that the recognizer can avoid homonym confusion. For example, the recognizer is said to be capable of distinguishing, from context, the words "two", "to" and "too". It is clear that similar sounding words are distinguished on the basis of context, rather than through template matching accuracy. The relevant grammatical rules are stored in a memory which is selectively used by the control means together with the template memory in the translation of the input sequence into an analogous sequence in the non-host language. On the basis of context the phrase "to the house" is translated from English to the Spanish equivalent of "a la casa" and not to the phrase "dos la casa".

Primarily the translation is done on a word-by-word basis, with look-up tables mapping individual words in the host language onto individual words in the target language, contextual adjustment then being necessary. The contextual adjustment allows, inter alia, translation of idiomatic phrases (such as "you're pulling my leg") other than on a word-by-word basis, that is by the substitution of an equivalent idiomatic phrase in the target language in place of a word-for-word translation. It is clear from this and the earlier discussion of language translation embodiments in '750 that it is only in the case of idiomatic expressions that word-by-word translations are not used. The teaching of this document is clearly directed towards word-by-word translation with contextual analysis and adjustment, with the sentences in the target language being assembled from separate words. Indeed, even in the case of idiomatic phrases, initial analysis is done on a word-by-word basis. It is not in fact explained how the case of an idiomatic phrase is in fact dealt with. Nevertheless, it is clear to the skilled person that the recognition system of '750 requires templates of all words which are to form the input phrases, since otherwise it is not clear how the necessary full contextual analysis could be achieved. Thus this system demands very advanced speech recognition, plus complex and powerful contextual analysis.

In BE-A-873458, which dates from 1979, there is described a computerised translation process for written language. Each of the words of the input text is compared with dictionaries of source language words. In the comparison stage each source language word is stored with grammatical information and target language translations. The processed words of the source text are analysed, at the rate of one sentence at a time, on a syntactical and semantic basis using the stored grammatical information to ensure correct translation.

Unlike the above-described systems, the system according to the present invention generates a target language output in response to a source language input without in the meanwhile having to carry out a contextual or semantic analysis. The system according to the invention operates on the basis of keywords, a relatively small number of keywords serving to characterise and differentiate a much larger number of phrases. Hence even relatively simple speech recognizers, having modest vocabularies, can be used to provide a speech-based language translation system capable of providing accurate translations of large numbers of phrases.

Such a system provides very quick translation, the time required being that to identify/characterise the input phrase and that to look up the "answer" in the second language.

The system can also be implemented to give the user providing the input confirmation that she/he has been recognised/understood correctly by the system, which is of course particularly important in speech translation systems.

Once it has been confirmed to the user that his message has been correctly characterised, accuracy of translation is ensured because the stored collection of phrases consists only of previously made accurate translations.

The system also makes possible rapid translation into several second languages simultaneously; essentially all that need be added are further stores holding collections of phrases in each of the additional second languages.

The invention is defined in the independent claims. Further preferred features of the invention are defined in the dependent claims.

Embodiments of the invention will now be described with reference to the accompanying drawings in which:

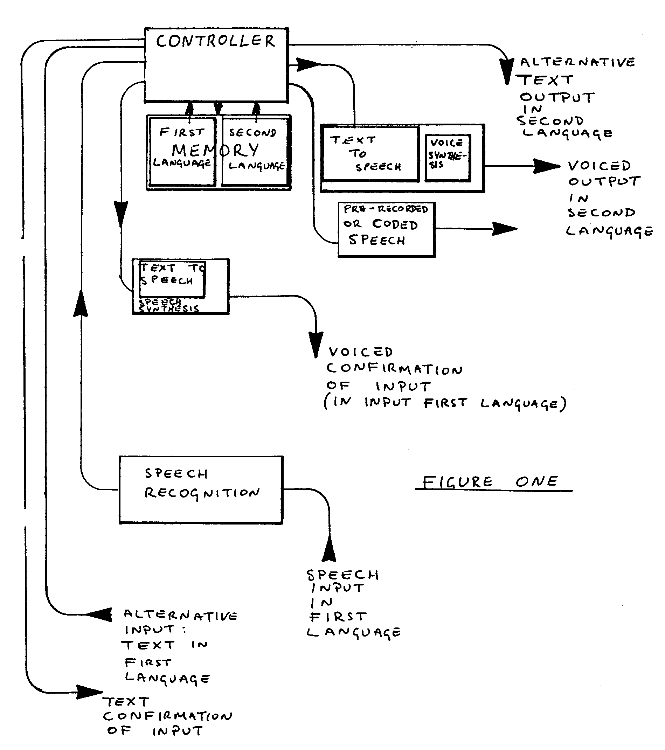

Figure 1 is a block diagram showing the principal components of a system according to the invention.

The present invention is based on our appreciation that it is possible to characterise and capture the semantic content of a large number of distinct phrases by means of a very much smaller number of keywords. With appropriate selection of the keywords it is possible to use existing, commercially available speech recognisers, which are only capable of recognising considerably fewer words than would be contained in a usefully large set of phrases, to characterise and differentiate a large set of phrases.

The performance of the translation system as a whole therefore rests on the ability of those keywords to correctly distinguish between phrases. The greater the separation of phrases achieved, the greater the system's tolerance to recognition errors, and also to discrepancies introduced by the speaker himself.

## The Selection of Keywords

A suitable search procedure is as follows:

1. Order each of the K words in the N phrases of interest according to the word's frequency of occurrence in the phrases.

2. Select the M most frequently occurring words as the initial keyword list, where M is the number of words in the vocabulary of the speech recogniser.

3. The presence or otherwise of each keyword in each phrase is then determined. The number of phrases (E) which are not distinguished by the keywords is counted.

4. Let i = 1.

5. A keyword is temporarily deleted from the list and the new value (E') of E is computed.

6. The score E' -E is assigned to the keyword which was temporarily deleted; this being a measure of worsening of the performance after the removal of the keyword, and hence its contribution to the overall performance. (In effect, this measure is used to ensure that each keyword contributes to the separation of as many phrase pairs as possible but without simply duplicating the function of others).

7. The temporarily deleted keyword is replaced and the process is repeated for each of the M keywords.

8. The word with the lowest score is removed from the current keyword list.

9. The M + i$^{th}$ most frequent word is then used to replace the removed word, and then a new E is calculated.

10. If the new E indicates an improved performance over the previous E then i is incremented and the process repeated from step 5 unless M + i > K in which case the process stops. Otherwise the M + i$^{th}$ word is rejected; i is incremented and the process repeated from step 9 unless M + i > K in which case the word last removed in step 8 is replaced and the process stops.

The final keyword list contains the optimal set of M single keywords for phrase identification.

Further iterations starting with the best M words from the previous iteration may yield further improvements in phrase separation. Heuristics other than frequency ordering may be used to provide the succession of candidate words in step 1, especially if a priori linguistic information is available. In addition, it is likely that the words towards the bottom of the occurrence list will not appreciably aid separation of phrases, and it may therefore not be worth searching through more than say the upper third or upper half of the occurrence list.

It is sometimes the case that most phrases are distinguished and E becomes very close to zero quite early in the search. Further improvements are obtained in these cases by computing E on the basis that phrases are only considered distinguished if more than oil keyword is different. This ensures that most phrases are separated by more than a minimum number of keywords and provides some immunity to speech recognition errors.

During the search it becomes clear that several classes of phrase are never going to be separated unless the keyword vocabulary is extended. These "clusters" or groups of phrases tend to differ only by a single word or subordinate string of words (eg dates in business letters), and are candidates derived automatically for use in the preparation of keyword subvocabularies (detailed below).

It is apparent that the recognition of single keywords takes no account of word order and the additional meaning that it may contain. The presence or otherwise of key pairs (or other multiples) of words with various separations between them can therefore also be used to improve the effectiveness of the single keyword set. This has the advantage in speech recognition that the performance may be improved without increasing the recognition vocabulary. In a text application further improvements can be obtained by generalising the keywords to include punctuation, parts of words, and combinations of words and parts of words. eg "-ing * bed" (where * can be any word) would be present in "making the bed" and "selling a bed".

The use of pairs of keywords (eg we * * to) enhances the value of the component single words if further phrase confusions are resolved. The search for word pairs which are not necessarily contiguous but separated by different numbers of other words, again begins with the preparation of a frequency ordering. Word pairs with both component words in the M keywords are made from the ordered list if they resolve any remaining phrase confusions. The final list of single keywords and pairs of keywords are each scored as before and an overall phrase confusion score E computed.

The search now begins for better performing word pairs where one or both of the component keywords are not in the current keyword list. The next word pair candidate is taken from the top of the frequency ordering and appended to the keyword list. The single keywords in the appended word pair which are not already present are also added and an equal number of the worst performing single keywords deleted. This may cause other word pairs to be deleted if their component words are no longer present. A new value (E') of E is computed. If an improvement is obtained and E'<E, the most recent modifications of the keyword list are retained, otherwise the list is restored to its previous state. Further word pairs are processed from the frequency ordering, although as with the single keyword search, other heuristics may be used to provide candidate word pairs.

It is worth observing that some keywords contribute more to the overall performance through their participation in several word groups than by themselves.

The method extends to larger keyword groupings (>2 words), but as the frequency of occurrence decreases, the contribution to the resolution of phrase confusions are only significant in a very large corpus of phrases.

The quantity of computation involved in the search for keywords increases with the number of keywords and the number of phrases. This may be reduced by first running the algorithm on a subset of phrases which are confused or very close to being confused. The keywords and their scores so obtained provide a more efficient ordering of candidate keywords to the main algorithm which will work with a more complete set of phrases.

In a speech recognition application some words which are not in the keyword set can generate many spurious keyword recognitions. eg. occurrences of the word "I" may be always recognised as the keyword "by". If however, the groups of confused words are considered as synonymous before the search for keywords begins and in the subsequent phrase identification, the actual phrase separations should not be affected by this problem. Furthermore because the frequency of such synonymous words taken together is necessarily higher than that of the separate words, a greater quantity of phrasal information is normally associated with their detection.

The use of keywords may be extended to keyword-parts ( e.g. phonemes ) which occur again with higher frequency and which bear more phrase distinguishing information than the whole words. Moreover the identification of certain word-parts in continuous speech is often easier than complete words, and is therefore preferable in a translation system which accepts continuous speech input. Throughout this specification the word "keyword" is for the sake of brevity used to refer to both whole keywords and to parts of keywords.

Many classes of phrase only differ from each other in subordinate phrases and clauses which may contain details of dates, times, prices, items, names or other groups of words. It may be that the vocabulary of a speech recogniser is sufficient to assign a phrase to a particular class or group of phrases but is not large enough to hold sufficient keywords to separate the subordinate structures. Furthermore it is quite possible that the total vocabulary required to separate the phrase classes and the subordinate structure contains many more words which are easily confused. This means that even if the capacity of the recogniser was sufficient to cover the whole vocabulary, the performance would be too low to obtain reliable phrase and subordinate phrase identification. It is an advantage of the method according to the invention that the original utterance or some transform of the original utterance may be stored in a buffer and the recognition process may be repeated, once the phrase class has been determined, using the set of keywords which are expected in the subordinate word strings particular to that phrase class. In this way the recognition apparatus never has to cope with the total vocabulary, with its many potential word confusions, at once, but appears to the user to do so. It should be noted that the speed of the second recognition process is not limited by the speed of the original utterance and can in principle be carried out much faster than real time and hence not necessarily introduce noticeable delays. The iterations of recognition may be carried out as many times as is necessary to identify the required phrase and its substructure. It thus becomes possible to 'nest' the recognition process, the phrase being characterised in numerous separate stages, the recogniser at each stage drawing on a different vocabulary of keywords.

Many, although not all, subordinate word strings will be context independent in the source language. This is because positions for subordinate word strings are only designated as such if several alternatives are possible making tight contextual dependence less likely for any one of them. In addition contextual importance would imply that there were dependencies between words which were inside and outside the potential subordinate string and hence there would be scope for keywords to distinguish the whole phrase without the use of words inside the string. This is illustrated in phrases containing changing dates in which there is rarely any word change necessary in the phrase apart from the date itself. (It is for future research to demonstrate the conjecture that such context independence is generally invariant between languages and use it to extend phrasebook translation indefinitely.)

This particular aspect of the invention also has significant benefits when employed for the translation of text where the computational costs of searching large dictionaries can be reduced dramatically by using a similar hierarchy of smaller dictionaries and phrasebooks. Some subordinate phrases do not need to be translated and often in these cases it would not in general be possible to recognise automatically the words in these phrases. The commonest case of this occurs in utterances which make reference to labels such as proper nouns: eg. "Can I speak to Mr Smith please?". As before, the system can identify the phrase class together with the locations of words in the buffer which correspond to the label reference. The processing of such label reference words during translation is then simply the transmission of the original acoustic signal in the appropriate place in the target language utterance. Clearly it is desirable that the synthesised target language voice should match the voice of the original speaker and it is a requirement of text-to-speech synthesisers that certain speech parameters can be set so that such matching can be achieved as far as possible (eg. old/young, male/female).

So that the user can be sure that the correct phrase will be output in the target language, the system indicates what phrase in the input language it will translate. In order to be able to do this, the system is provided with a store holding the full repertoire of phrases in the input language.

Preferably in the system the phrases are stored as text, in for example ASCII coded form, since that reduces the storage requirement very considerably compared to that needed for conventionally companded or non-companded speech. Where speech output is required, the text is retrieved from store and passed to a text to speech converter and speech synthesiser. With ASCII coded text storage, 1 byte per character is needed, which means that about 10,000 phrases could be stored with half a megabyte of storage. Hence a system providing translation of about 10,000 phrases would require about 1 megabyte of storage - which is easily provided on hard disc. Two-way communication is possible using two symmetrically constructed translation systems. This has the advantage that each unit is only concerned with recognising and synthesising words in the language of the person operating that unit. Communication with the second unit is by means of a protocol which specifies the phrase and the contents of any subordinate phrases. The protocol is independent of language and hence allows messages to be transmitted without the need to identify the target language. In addition it allows people using many different languages to receive simultaneously translations from the output of a single unit.

EXAMPLE

A demonstration system, connected to a telephone network, has been run to demonstrate the feasibility of the phrase-book approach. The demonstration system uses a Votan speech recogniser, an Infovox speech synthesiser and an IBM PC XT computer.

The Votan speech recogniser is capable of recognizing up to 64 continuously spoken words over a telephone network. Allowing for system control words such as "yes", "no", "quit" and "enter", upto 60 words can be chosen to be keywords. None of the system control words are allowed to appear in the input phrases, so where it is possible it may be preferable to use control buttons or keys rather than spoken commands.

The store of phrases consists of 400 English phrases and their French equivalents.

The English phrases contain around 1100 different words. To put these numbers in context, a standard phrasebook of business expressions would typically contain this number of phrases.

After running keyword extraction software based on the principles outlined above, 60 keywords were chosen which successfully separated all the phrases. Of the 400 phrases, only 32 were distinguished by just a single word (those 32 phrases being in 16 pairs).

The demonstration system, on recognising the keyword(s), accesses the appropriate phrase, confirms it (orally) with the user and outputs the French equivalent via a text to speech synthesiser.

It is important to note that text-to-speech synthesis is not essential to this invention. It is quite feasible, indeed advantageous, to synthesise target language speech from pre-recorded or coded words and phrases. This has the advantage that such speech may be recorded by the user and hence will acoustically match any embedded speech, and removes the need for text-to-speech synthesis. This approach also removes the need for text-to-speech synthesis in the languages of important countries where such technology is unlikely to produce useable hardware in the immediate future - for example Hindi and Arabic.

In addition to speech-to-speech translation, the present invention is of course applicable to text-to-text, text-to-speech or speech-to-text translation. A particularly useful application is in the field of office automation, where a speech activated foreign language text producing machine could readily be implemented. Essentially, such a machine would use the speech recogniser, software and control system described above, but output the second language text to a printer or telex or other telecommunications link. It would of course be a simple matter to provide the standard phrases of everyday business correspondence in several languages.

## Claims

1. A system for translating multi-word phrases from a first language into a second language, comprising input means for accepting an input phrase in the first language; a store holding a collection of phrases in the second language; characterisation means connected to said input means for determining which phrase of the collection corresponds to the input phrase, and to control the output of that phrase; and output means responsive to the characterisation means for outputting the determined phrase in the second language;
wherein the characterisation means comprises means to recognise in the input phrase the presence of at least one keyword or keyword-part of a predetermined set of keywords or keyword-parts, and to select, in dependence on those recognised keywords or keyword-parts, said corresponding phrase from the stored collection;
the system being characterised in that the number of members in said set is smaller than the number of phrases in the collection.

2. A system as claimed in claim 1, the system comprising first and second terminals operably connected via a data link, the first terminal comprising said input means and said characterisation means; the second terminal comprising said store and said output means; wherein said first terminal further comprises means to generate a message for transmission to said second terminal via said data link, which message indicates which of said collection of phrases corresponds to said input phrase.

3. A system as claimed in claim 1 or claim 2 in which the characterisation means applies a first set of keywords to determine to which phrase or group of phrases, if any, from said collection of phrases the input phrase corresponds, and in the case that the input phrase is found to correspond to an undetermined one of a group of phrases, the characterisation means applies a second set of keywords to determine to which of a group of phrases the input phrase corresponds.

4. A system as claimed in any one of the preceding claims, wherein the characterisation means comprises a speech recogniser.

5. A system as claimed in any one of the preceding claims, wherein said input means is capable of accepting spoken inputs, and said output means provides voiced outputs.

6. A system as claimed in any one of the preceding claims, wherein means are provided to enable portions of said input phrase to be passed untranslated to said output means for outputting as part of the phrase in the second language.

7. A system as claimed in claim 1 further comprising a keyboard for providing an input message to said input means, and means to provide a text output in said second language.

8. A system as claimed in any one of the preceding claims for providing translations from a first language into any one of a plurality of second languages, a collection of phrases in each of said plurality of second languages being provided in a respective store.

9. A system according to claim 1 in which each phrase of said collection includes at least one keyword or keyword-part and each phrase of said collection uniquely contains a given keyword, keyword-part or combination thereof.

10. A system according to claim 1 in which said characterisation means operates to determine said corresponding phrase without comparing said detected keywords with a collection of phrases in said first language.

11. A system as claimed in claim 1, wherein the keyword recognition means contains a set of keywords optimally selected for a desired set of plural phrases to be recognized and identifies correspondence between said input phrase and a phrase within said collection of stored phrases in response to detected occurrence of multiple ones of said keywords within said input phrase;
the system further comprising outputting means operatively connected to said keyword recognition means and to said store for selecting and outputting an output phrase from said store corresponding to said input phrase in response to said detected keyword occurrences within said input phrase;

12. A system as in claim 11 wherein said keyword recognition means includes keyword memory means for storing as keywords only an optimal subset of words occurring in said collection of phrases to be recognized, said optimal subset being determined beforehand as being most useful in distinguishing between phrases within said collection of desired plural multiword phrases to be recognized.

13. A system as in claim 12 wherein:
said keyword recognition means contains a plurality K of keywords; and
said collection of input phrases to be recognized comprises N input phrases, N > K.

14. A system for translating multi-word phrases from a first language into a second language, comprising:
a store holding a collection of phrases in the second language;
input means for accepting a phrase in the first language; characterisation means connected to said input means for determining which phrase of said collection corresponds to said input phrase, said characterisation means comprising keyword detection means for detecting in said input phrase the presence of members of a predetermined set of keywords or keyword parts in said first language;
lookup means arranged to access said store to address that phrase which corresponds to the input phrase in dependence upon the keyword or keyword parts or combinations thereof detected by the characterisation means in the input phrase; and output means responsive to said lookup means for outputting said phrase in said second language;
and characterised in that said predetermined set is smaller than the total number of words in the phrases in said first language which would correspond to said collection of phrases.

15. A system as in claim 14 wherein no one-to-one correspondence exists between keywords and input phrases to be recognised.

16. A system as claimed in claim 14 or claim 15, wherein the input means accepts voiced inputs, the characterisation means including speech recognition means.

**Patentansprüche**

1. System für die Übersetzung von Mehrwörter-Redewendungen aus einer ersten Sprache in eine zweite Sprache, enthaltend -eine Eingabevorrichtung zur Annahme einer eingegebenen Redewendung in der ersten Sprache: einen Speicher zur Aufnahme einer Sammlung von Redewendungen in der zweiten Sprache: eine Kennzeichnungsvorrichtung, verbunden mit der Eingabevorrichtung, zur Bestimmung, welche Redewendung der Sammlung der eingegebenen Redewendungen entspricht, und zum Steuern der Ausgabe dieser Redewendung; und eine Ausgabevorrichtung, die auf die Kennzeichnungsvorrichtung anspricht zur Ausgabe der bestimmten Redewendung in der zweiten Sprache;
wobei die Kennzeichnungsvorrichung eine Vorrichtung enthält, die in der eingegebenen Redewendung das Vorhandensein von wenigstens einem Schlüsselwort oder Schlüsselwortteil einer vorbestimmten Gruppe von Schlüsselwörtern oder Schlüsselwortteilen erkennt, und die in Abhängigkeit von diesen erkannten Schlüsselworten oder Schlüsselwortteilen die entsprechende Redewendung aus der gespeicherten Sammlung auswählt; wobei das System dadurch gekennzeichnet ist, daß die Zahl der Mitglieder in der Gruppe kleiner als die Zahl der Redewendungen in der Sammlung ist.

2. System nach Anspruch 1, enthaltend ein erstes und zweites Terminal, die betriebsmäßig über eine Datenverbindung verbunden sind, wobei das erste Terminal die Eingabevorrichtung und die Kernzeichnungsvorrichtung enthält, das zweite Terminal den Speicher und die Ausgabevorrichtung; wobei das erste Terminal ferner eine Vorrichtung zur Erzeugung einer Mitteilung für die Übermittlung an das zweite Terminal über die Datenverbindung enthält, welche Mitteilung angibt, welche aus der Sammlung von Redewendungen der eingegebenen Redewendung entspricht.

3. System nach Anspruch 1 oder 2, wobei die Kennzeichnungsvorrichtung die erste Gruppe von Schlüsselwörtern anwendet, um zu bestimmen, welcher Redewendung oder Gruppe von Redewendungen, wenn überhaupt, aus der Sammlung von Redewendungen der eingegebenen Redewendung entspricht, und wobei im Fall, daß die eingegebene Redewendung als entsprechend einer unbestimmten aus der Gruppe von Redewendungen gefunden wird, die Kennzeichnungsvorrichtung eine zweite Gruppe von Schlüsselwörtern anwendet, um zu bestimmen, welcher aus einer Gruppe von Redewendungen die eingegebene Redewendung entspricht.

4. System nach einem der vorhergehenden Ansprüche, wobei die Kennzeichnungsvorrichtung einen Spracherkenner enthält.

5. System nach einem der vorhergehenden Ansprüche, wobei die Eingabevorrichtung gesprochene Eingaben anzunehmen vermag, und die Ausgabevorrichtung gesprochene Ausgaben bereitstellt.

6. System nach einem der vorhergehenden Ansprüche, wobei eine Vorrichtung vorgesehen ist, um Teile der eingegebenen Redewendung unübersetzt an die Ausgabevorrichtung weitergeben zu können, für die Ausgabe als Teil der Redewendung in der zweiten Sprache.

7. System nach Anspruch 1, enthaltend eine Tastatur, um eine Eingangsmitteilung an die Eingabevorrichtung zu liefern, und eine Vorrichtung, um eine Textausgabe in der zweiten Sprache bereitzustellen.

8. System nach einem der vorhergehenden Ansprüche zur Übersetzung einer ersten Sprache in irgendeine einer Vielzahl von zweiten Sprachen, wobei eine Sammlung von Redewendungen in jeder der Vielzahl von zweiten Sprachen in einem zugehörigen Speicher bereitgestellt wird.

9. System nach Anspruch 1 wobei jede Redewendung der Sammlung wenigstens ein Schlüsselwort oder ein Schlüsselwortteil enthält und jede Redewendung der Sammlung einzig und allein ein gegebenes Schlüsselwort, einen Schlüsselwortteil oder eine Kombination daraus enthält.

10. System nach Anspruch 1, wobei die Kennzeichnungsvorrichtung wirksam wird zur Bestimmung der entsprechenden Redewendung ohne Vergleich der erfaßten Schlüsselwörter mit einer Sammlung von Redewendungen in der ersten Sprache.

11. System nach Anspruch 1, wobei die Schlüsselwort-Erkennungsvorrichtung eine Gruppe von Schlüsselwörtern enthält, die optimal für eine gewünschte Gruppe von mannigfaltigen zu erkennenden Redewendungen ausgewählt ist, und Übereinstimmung zwischen der eingegebenen Redewendung und einer Redewendung in der Sammlung von gespeicherten Redewendungen identifiziert, aufgrund des erfaßten Auftretens von mehrfachen der Schlüsselwörter in der eingegebenen Redewendung; und wobei das System eine Ausgabevorrichtung enthält, die betriebsmäßig mit der Schlüsselwort-Erkennungsvorrichtung und dem Speicher verbunden ist, für die Auswahl und die Ausgabe einer Ausgaberedewendung aus dem Speicher entsprechend der eingegebenen Redewendung, aufgrund des erfaßten Auftretens von Schlüsselwörtern in der eingegebenen Redewendung.

12. System nach Anspruch 11, wobei die Schlüsselwort-Erkennungsvorrichtung eine Schlüsselwort-Speichervorrichtung enthält, um als Schlüsselwörter nur eine optimale Untergruppe von in der Sammlung zu erkennender Redewendungen auftretenden Wörtern zu speichern, wobei die optimale Untergruppe vorher als am besten verwendbar festgestellt worden ist, um zwischen Redewendungen in der Sammlung von gewünschten zu erkennenden mannigfaltigen Mehrwort-Redewendungen zu unterscheiden.

13. System nach Anspruch 12, wobei die Schlüsselwort-Erkennungsvorrichtung eine Vielzahl K von Schlüsselwörtern und die Sammlung von eingegebenen zu erkennenden Redewendungen N eingegebene Redewendungen enthält, wobei N > K ist.

14. System für die Übersetzung von Mehrwort-Redewendungen aus einer ersten Sprache in eine zweite Sprache, enthaltend einen Speicher zur aufnahme einer Sammlung von Redewendungen in der zweiten Sprache; einer Eingabevorrichtung zur Annahme einer Redewendung in der ersten Sprache; eine Kernzeichnungsvorrichtung, verbunden mit der Eingabevorrichtung, zur Bestimmung, welche Redewendung der Sammlung der eingegebenen Redewendung entspricht, wobei die Kennzeichnungsvorrichtung eine Schlüsselwort-Erfassungsvorrichtung enthält zur Erfassung des Vorhandenseins von Gliedern einer vorbestimmten Gruppe von Schlüsselwörtern oder Schlüsselwortteilen in der ersten Sprache in der eingegebenen Redewendung; eine Auffindevorrichtung, eingerichtet für den Zugriff auf den Speicher, um diejenige Redewendung anzusteuern, die der eingegebenen Redewendung entspricht, in Abhängigkeit von dem Schlüsselwort oder Schlüsselwortteilen oder Kombinationen hiervon, die von der Kennzeichnungsvorrichtung in der eingegebenen Redewendung erfaßt worden ist; und eine Ausgabevorrichtung, die auf die Auffindevorrichtung anspricht zur Ausgabe der Redewendung in der zweiten Sprache; dadurch gekennzeichnet, daß die vorbestimmte Gruppe kleiner ist als die Gesamtzahl von Wörtern in den Redewendungen in der ersten Sprache, die der Sammlung von Redewendungen entsprechen würde.

15. System nach Anspruch 14, wobei keine 1:1 Übereinstimmung zwischen Schlüsselwörtern und eingegebenen zu erkennenden Redewendungen existiert.

16. System nach Anspruch 14 oder 15, wobei die Eingabevorrichtung gesprochene Eingaben annimmt und die Kennzeichnungsvorrichtung eine Spracherkennungsvorrichtung enthält.

## Revendications

1. Un système de traduction de phrases à mots multiples à partir d'une première langue dans une deuxième langue, comprenant des moyens d'entrée recevant une phrase d'entrée dans la première langue; une mémoire dans laquelle sont stockées un jeu de phrases dans la deuxième langue; des moyens de caractérisation reliés auxdits moyens d'entrée pour déterminer quelle phrase parmi les phrases collectées correspond à la phrase d'entrée, et pour commander la sortie de cette phrase; et des moyens de sortie sensibles aux moyens de caractérisation, pour la phrase déterminée dans la deuxième langue;

dans lequel les moyens de caractérisation comprennent des moyens d'identification, dans la phrase d'entrée, de la présence, d'au moins, un mot-clef ou d'une partie de mot-clef d'un jeu de mots-clefs ou de parties de mots-clefs prédéterminés, et pour choisir en fonction de ces mots-clefs ou parties de mots-clefs identifiés, ladite phrase correspondante dans la collection de phrases stockées;

le système étant caractérisé en ce que le nombre de membres dudit jeu est inférieur au nombre de phrases collectées.

2. Un système selon la revendication 1, le système comprenant des premier et second terminaux fonctionnant en liaison, par l'intermédiaire d'une liaison de transmission de données, le premier terminal comprenant lesdits moyens d'entrée et lesdits moyens de caractérisation; le second terminal comprenant ladite mémoire et lesdits moyens de sortie; dans lequel ledit premier terminal comprend en outre des moyens pour émettre un message à transmettre audit second terminal par l'intermédiaire de ladite liaison de transmission de données, ledit message indiquant quelle phrase de ladite collection de phrases correspond à ladite phrase d'entrée.

3. Un système selon la revendication 1 ou 2, dans lequel les moyens de caractérisation appliquent un premier jeu de mots-clefs pour déterminer à quelle phrase ou groupe de phrases, éventuellement, parmi ladite collection de phrases, la phrase d'entrée correspond et, dans le cas où il est trouvé que la phrase d'entrée correspond à l'une des phrases indéterminées d'un groupe de phrases, les moyens de caractérisation appliquent un second jeu de mots-clefs pour déterminer à quelle phrase d'un groupe de phrases correspond la phrase d'entrée.

4. Un système selon l'une quelconque des précédentes revendications, dans lequel les moyens de caractérisation comprennent un identificateur de parole.

5. Un système selon l'une quelconque des précédentes revendications, dans lequel lesdits moyens d'entrée sont capables d'accepter des entrées vocales, et lesdits moyens de sortie émettent des sorties vocales.

6. Un système selon l'une quelconque des précédentes revendications, dans lequel il est prévu des moyens de validation de parties de ladite phrase d'entrée à transmettre non traduites auxdits moyens de sortie afin de les émettre comme parties de phrase dans la deuxième langue.

7. Un système selon la revendication 1, comprenant en outre un clavier pour envoyer un message d'entrée auxdits moyens d'entrée et des moyens pour fournir une sortie de texte dans ladite deuxième langue.

8. Un système selon l'une quelconque des précédentes revendications pour donner des traductions à partir d'une première langue dans l'une quelconque d'une pluralité de secondes langues, une collection de phrases dans chacune de ladite pluralité de secondes langues étant stockée dans une mémoire respective.

9. Un système selon la revendication 1, dans lequel chaque phrase de ladite collection comprend, au moins, un mot-clef ou une partie de mot-clef et chaque phrase de ladite collection contient uniquement un mot-clef, une partie de mot-clef ou une combinaison de ceux-ci.

10. Un système selon la revendication 1, dans lequel lesdits moyens de caractérisation agissent pour déterminer ladite phrase correspondante sans comparer lesdits mots-clefs détectés à une collection de phrases dans ladite première langue.

11. Un système selon la revendication 1, dans lequel les moyens d'identification de mots-clefs contiennent un jeu de mots-clefs choisis de façon optimale pour un jeu souhaité d'une pluralité de phrases à identifier et identifie la correspopndance entre ladite phrase d'entrée et une phrase de ladite collection de phrases mémorisée en réponse à la présence détectée d'une pluralité desdits mots-clefs dans ladite phrase d'entrée;

le système comprenant en outre des moyens de sortie reliés en service auxdits moyens d'identification de mots-clefs et à ladite mémoire pour sélectionner et sortir une phrase de sortie de ladite mémoire, correspondant à ladite phrase d'entrée, en réponse à la présence desdits mots-clefs détectés dans ladite phrase d'entrée.

12. Un système selon la revendication 11, dans lequel lesdits moyens d'identification de mots-clefs comprennent des moyens formant mémoire de mots-clefs pour ne stocker sous forme de mots-clefs qu'un jeu secondaire optimal de mots rencontrés dans ladite collection de phrases à identifier, ledit jeu secondaire optimal étant déterminé auparavant comme étant le plus utile pour distinguer entre les phrases de ladite collection, les phrases à mots multiples que l'on souhaite identifier.

13. Un système selon la revendication 12, dans lequel :

lesdits moyens d'identification de mots-clefs contiennent une pluralité K de mots-clefs; et

ladite collection de phrases d'entrée à identifier comprend N phrases d'entrée, N étant supérieur à K.

14. Un système pour la traduction de phrases à mots multiples à partir d'une première langue dans une deuxième langue, comprenant:

une mémoire pour stocker une collection de phrases dans la deuxième langue;

des moyens d'entrée pour recevoir une phrase dans la première langue;

des moyens de caractérisation reliés auxdits moyens d'entrée pour déterminer quelle phrase de ladite collection correspond à ladite phrase d'entrée, lesdits moyens de caractérisation comprenant des moyens de détection de mots-clefs pour déterminer dans ladite phrase d'entrée la présence de membres d'un jeu prédéterminé de mots-clefs ou de parties de mots-clefs dans ladite première langue;

des moyens de consultation ou de recherche agencés pour avoir accès à ladite mémoire afin d'adresser la phrase correspondant à la phrase d'entrée en fonction du mot-clef ou des parties de mots-clefs ou d'une combinaison de ceux-ci, détectés par les moyens de caractérisation dans la phrase d'entrée;

et des moyens de sortie agissant en réponse auxdits moyens de consultation pour émettre ladite phrase dans ladite deuxième langue;

et caractérisé en ce que ledit jeu prédéterminé est inférieur au nombre total de mots des phrases dans ladite première langue qui correspondrait à ladite collection de phrases.

15. Un système selon la revendication 14, dans lequel il n'existe aucune correspondance à un pour un entre les mots-clefs et les phrases d'entrée à identifier.

16. Un système selon la revendication 14 ou 15, dans lequel les moyens d'entrée acceptent des entrées vocales, les moyens de caractérisation comprenant des moyens d'identification de parole.

FIGURE ONE